# EUROPEAN PATENT SPECIFICATION

(11) **EP 0 980 847 B1**
(45) Date of publication and mention of the grant of the patent: **28.05.2003**
(21) Application number: 99115921.1
(22) Date of filing: 12.08.1999
(51) Int. Cl.: C03B 33/04, C03B 33/07, C03B 33/027

(54) **Cutting table for processing sheets of glass**
Schneidetisch zur Behandlung von Glasscheiben
Table de coupe pour le traitement de feuilles de verre

(30) Priority: 14.08.1998 IT TO980711
(43) Date of publication of application: 23.02.2000
(73) Proprietor: BOTTERO S.p.A., 12010 Cuneo (IT)
(72) Inventor: Aimar, Giacomo, 12010 Cervasca (IT); Bisotto, Sebastiano, 12012 Boves (IT); Boggia, Claudio, 12100 Cuneo (IT)
(74) Representative: Franzolin, Luigi

(56) References cited:
- EP-A- 0 140 794
- EP-A- 0 861 813
- DE-C- 19 822 282
- FR-A- 2 375 041
- GB-A- 2 244 231
- US-A- 2 328 405
- US-A- 3 150 806
- US-A- 4 709 483

## Description

The present invention relates to a cutting table for processing sheets of glass.

More specifically, the present invention relates to a cutting table for processing sheets of glass with or without metal and/or plastic surfacing material and/or paint on at least one face of the glass portion of the sheet, or for processing laminated glass, and of the type comprising a supporting frame defining a supporting surface for the sheet for processing; a powered gantry structure connected to the supporting frame to slide in a first direction and in a position facing the supporting surface; a powered carriage connected to the gantry structure to slide in a second direction crosswise to the first direction; a notching tool carried by the carriage; and a control unit for moving the notching tool over the supporting surface.

Though widely used, known cutting tables of the above type have the drawback of normally involving fairly painstaking setting and setup procedures, thus greatly increasing operating cost, especially when notching involves moving the tool along particularly complex paths or trajectories. Moreover, known cutting tables only provide for notching and break-off operations.

FR-A- 2 368 074 discloses an electric circuit to drive a machine for cutting glass sheets on the basis of information stored on a magnetic medium comprising a magnetic tape having magnetic tracks. The machine comprises a carriage supporting a notching tool and able to be moved along two axes x and y to follow a given path, the notching tool tracing this given path.

EP-A-0 484 674 discloses a process for the automatic machining of edges of glass plate and an apparatus for carrying out the process.

It is an object of the present invention to provide a cutting table for processing sheets of glass, designed to eliminate the above drawbacks in a straightforward manner, and which, in particular, provides for any sort of processing of the major surfaces of the sheets, regardless of sheet size or the size of the articles broken off the sheets, as well as for effecting a rapid changeover in production.

According to the present invention, there is provided a cutting table for processing sheets of glass, as defined in Claim 1.

A non-limiting embodiment of the invention will be described by way of example with reference to the accompanying drawings, in which:
Figure 1 shows a schematic view in perspective of a preferred embodiment of the cutting table according to the present invention;
Figure 2 shows the same view as, and a variation of a detail in, Figure 1.

Number 1 in the accompanying drawings indicates as a whole a cutting table for processing a sheet 2 of glass, and in particular for performing different processing operations on the major surfaces 3 of sheet 2, regardless of the construction characteristics of sheet 2.

Table 1 comprises a supporting frame 4; and a board 5 defining a supporting surface 6 for the sheet 2 of glass for processing, and which is connected to the frame either in a fixed position or on a swivel.

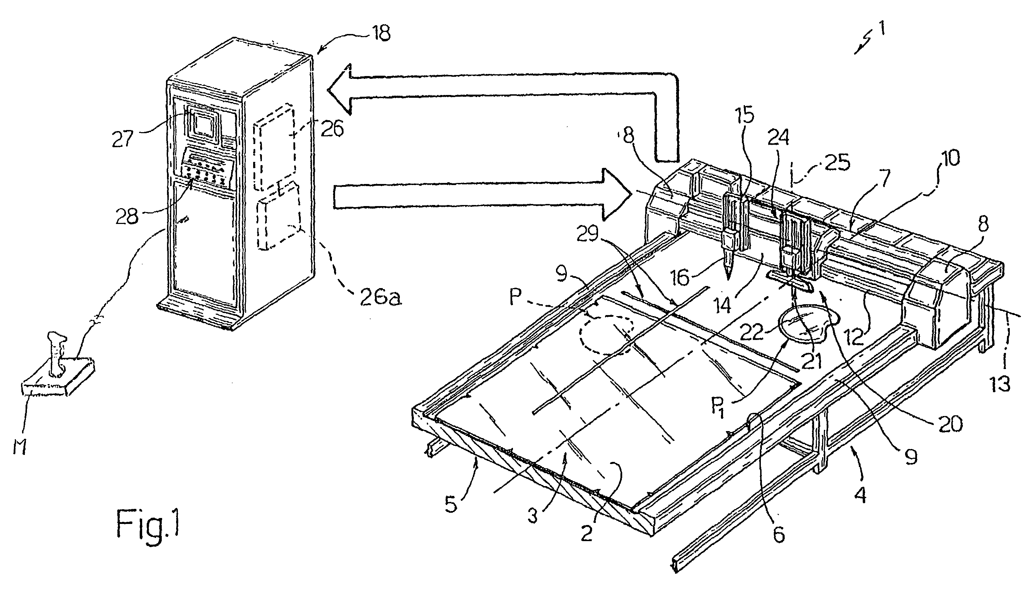

With reference to Figure 1, table 1 also comprises a known powered cutting bridge 7 which in turn comprises two uprights 8, each connected in sliding manner to a respective straight guide 9 integral with the board so as to slide in a longitudinal direction 10, and a cross member 12 extending over supporting surface 6. A powered cutting carriage 14 is fitted to cross member 12 so as to slide in a direction 13 perpendicular to direction 10, and carries a known supporting assembly 15 for supporting a known notching tool 16, neither described in detail. Table 1 also comprises a respective electronic control unit 18 for controlling the movement of bridge 7 and carriage 14 in their respective directions, and for moving notching tool 16 along given notching paths P, only one of which is shown by way of example by the dash line in Figure 1.

With reference to Figure 1, table 1 also comprises a tracing station 20 formed on board 5; and a known, e.g. optical-fiber, tracing device 21 which is movable at station 20 to trace a reference path P1 located at station 20. In the example described, reference path P1 is defined by the contour of a two-dimensional pattern 22. Alternatively, reference path P1 is defined by a straightforward line drawn on a plane surface and conveniently on ordinary sheet material at station 20.

In the example described, device 21 is connected to carriage 14 by a known guide-slide assembly 24 by which to move tracing device 21 to and from supporting surface 6 in a substantially vertical direction 25. Alternatively, in a variation not shown, tracing device 21 is connected directly to assembly 15 supporting notching tool 16. In both cases, tracing device 21 is connected directly, by wiring (not shown), to unit 18 which comprises a memory 26 for memorizing in known manner the reference path P1 traced by device 21, and a control assembly - shown schematically and indicated 26a - for controlling and synchronizing bridge 7, carriage 14, and assembly 15.

In actual use, once reference path P1 is located at station 20, device 21 traces and supplies path P1 directly to unit 18, which memorizes path P1 in memory 26. At this point, if the traced path P1 is acceptable, by being practically identical to the desired path P, unit 18, as a function of path P1, supplies signals to so control bridge 7 and carriage 14 as to move notching tool 16 along a notching path identical to the traced path.

Conversely, if the traced path P1 differs from the desired path, the traced path may be altered by the operator by means of unit 18. For which purpose, unit 18 comprises a display device 27 for displaying the memorized path; and a keyboard 28 by which the table 1 operator may, e.g. when setting and setting up the table, correct and/or alter the memorized traced path P1 to obtain and memorize another desired reference path. At this point, the operator instructs unit 18 to control notching tool 16 as a function of the newly memorized reference path. In a preferred operating mode, a number of reference paths are located at station 20, and the operator, by means of a joystick control device M, moves device 21 to a zero or start point of each path, and then commences tracing and storage of the various paths as described above. By means of keyboard 28, the operator may then select one or a sequence of paths in memory 26 and so control the movement of notching tool 16 according to the selected path/s.

With reference to Figure 1, table 1 also comprises a known break-off assembly 29 by which sheet 2 is broken along the previously formed notch lines. In a variation not shown, table 1 has no break-off assembly 29, and sheet 2 is either broken manually along the notch lines in known manner or transferred to a known break-off table.

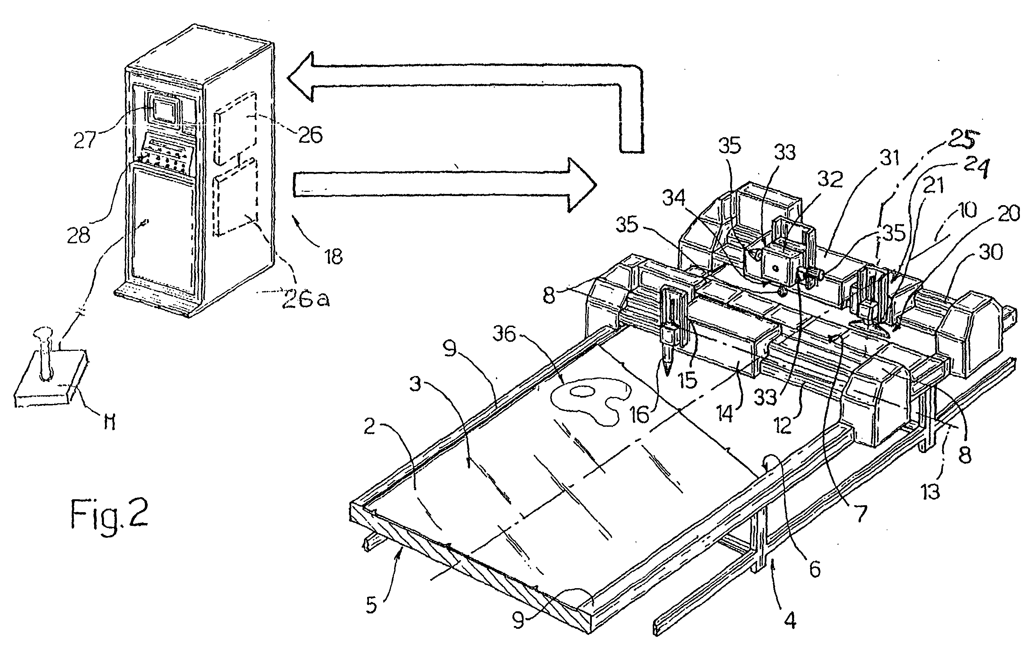

In the Figure 2 variation, table 1 also comprises a further cutting bridge 30 which, in the example shown, is similar to bridge 7, is connected to board 5 in the same way as bridge 7, and carries a respective powered carriage 31 which slides in a direction parallel to direction 13. In the Figure 2 variation, as opposed to being connected to carriage 14, tracing device 21 is supported, in the same way as described for carriage 14, by carriage 31 which also supports a known rotary toolhead 32.

In the example shown, toolhead 32 rotates about an axis substantially parallel to supporting surface 6, and comprises a number of selectively activated spindles 33 and 34, each fitted with a respective cutting tool 35, e.g. a grinding wheel, cutter and/or drill, for performing material-removing operations on sheet 2; spindles 33 have respective axes of rotation parallel to surface 6, and spindle 34 a respective axis of rotation perpendicular to surface 6.

Bridge 30, carriage 31 and toolhead 32 are also controlled directly by unit 18 which, again on the basis of paths traced beforehand by device 21 as described previously and memorized in unit 18, supplies bridge 30, carriage 31 and toolhead 32 with a number of control signals - independent of those supplied to bridge 7, carriage 14 and assembly 15 supporting notching tool 16 - to perform cutting, grinding and drilling operations 36 on sheet surface 3.

In actual use, therefore, the tracing device and the notching tool together permit the formation on sheet 2 of notch lines of any shape, and in particular notch lines of particular shapes which cannot be keyboard-entered directly into unit 18 by means of straightforward mathematical equations. The presence of a tracing station coincident with supporting surface 6, and therefore extremely extensive, provides for tracing patterns of any size or shape.

The tracing device and the rotary toolhead together also obviously enable material-removing operations to be performed on surface 3 of sheet 2, and hence artistic machining of a sheet 2 of any size. More specifically, cavities and/or grooves of any shape or geometry may obviously be formed easily in sheet 2 by simply producing - e.g. in readily workable materials - three-dimensional patterns identical, complementary or similar in shape to those of the desired cavities or grooves, and by tracing, directly on the cutting table, and immediately memorizing the lateral surface of the pattern prior to working sheet 2. In this case also, spindles 33 and 34 may be operated to faithfully reproduce the traced pattern; or the traced pattern, like the notching path, may be altered to obtain another desired pattern which, as stated, may also be memorized and used for controlling different cutting tools.

Unlike known tables, cutting table 1 as described therefore provides for extremely fast changeover in production, as well as for equally rapidly re-producing and/or making changes to previously memorized notch lines or patterns with substantially no difficulty whatsoever.

Unlike known tables, cutting table 1 as described also provides for machining sheet 2 to obtain a faithful or modified reproduction of a pattern traced directly on the supporting surface.

Claarly, changes may be made to cutting table 1 as described herein without, however, departing from the scope of the present invention. In particular, powered bridges 7, 30 and the assemblies connecting notching tool 16 and tracing device 21 to respective carriages 14, 31 may be replaced by other supporting and actuating devices; the geometry of board 5 may be other than as described; and tracing station 20 may be located differently from the one described by way of example, and, in particular, may be located close to one edge of board 5.

Finally, notching tool 16, tracing device 21 and the rotary toolhead may be carried by the same actuating means, and in particular by the same cutting bridge.

## Claims

1. A cutting table (1) for processing sheets (2) of glass, the cutting table (1) comprising a supporting frame (4, 5) defining a supporting surface (6) for a sheet (2) for processing; a notching tool (16) for notching said sheet (2); and first supporting and actuating means (7, 14, 15) for supporting and actuating said notching tool (16) and supported by said supporting frame (4, 5) in a position facing the supporting surface (6); a tracing station (20) at least partly coincident with said supporting surfaces (6); tracing means (21) for tracing at least one reference path (P1) at said tracing station (20); powered second supporting and actuating means (7,14,24; 24,30,31) supported by said supporting frame (4, 5) to move said tracing means (21) at least at said tracing station (20); and a control unit (18) connected directly to said tracing means (21) and comprising memory means (26) for memorizing at least said reference path (P1) supplied by said tracing means (21), and control means (26a) for moving at least the notching tool (16) over said supporting surface (6) as a function of the memorized said reference path (P1), **characterised in that** said tracing means (21) are distinct from the notching tool (16) and comprises an optical-fiber tracing device (21) to trace the reference path (P1) independently to the means used to define or support the reference path (P1).

2. A table as claimed in Claim 1, **characterized in that** said control unit (18) also comprises control means (28) for altering the traced said reference path (P1) to obtain a modified reference path, and for memorizing the modified reference path in said memory means (26) ; said control unit (18) controlling at least said notching tool (16) on the basis of said modified reference path.

3. A table as claimed in Claim 2, **characterized in that** said control unit (18) comprises display means (27) for displaying at least one of said reference paths memorized in said memory means (26).

4. A table as claimed in Claim 2 or 3, **characterized by** comprising selecting means (28) for selecting at least one of said reference paths memorized in said memory means (26).

5. A table as claimed in any one of the foregoing Claims, **characterized in that** said second supporting and actuating means (7,14,24; 24,30,31) comprise actuating means (24) for moving said tracing means (21) to and from said supporting surface (6).

6. A table as claimed in any one of the foregoing Claims, **characterized in that** said first supporting and actuating means (7, 14, 15) comprise a powered carriage (14) for supporting said notching tool (16); and **in that** the tracing means (21) are carried by said carriage (14).

7. A table as claimed in any one of Claims 1 to 5, **characterized in that** said first (7, 14, 15) and second (24, 30, 31) supporting and actuating means comprise respective supporting structures (7, 14), (30, 31) separate from each other and both supported by said supporting frame (4, 5) to move over said supporting surface (6) independently of each other.

8. A table as claimed in any one of the foregoing Claims, **characterized by** also comprising a powered operating head (32), and third supporting and actuating means (30, 31) for supporting and actuating said operating head (32) and supported by said supporting frame (4, 5); said operating head (32) comprising at least one tool spindle (33;34) rotating about a respective axis, and a cutting tool (35) carried by said spindle (33;34) to perform a material-removing operation on said sheet (2) of glass.

9. A table as claimed in Claim 8, **characterized in that** said axis forms with said supporting surface an angle other than zero.

10. A table as claimed in Claim 8, **characterized in that** said axis is substantially parallel to said supporting surface (6).

11. A table as claimed in one of Claims 8 to 10, **characterized in that** said operating head (32) comprises a number of selectively activated spindles (33, 34).

12. A table as claimed in any one of the foregoing Claims, **characterized in that** said tracing station (20) houses a number of said reference paths (P1); and **in that** said control unit (18) comprises actuating means (M) for moving said tracing means (21) to given points of said tracing station (20), each corresponding to a reference point of a respective said reference path (P1).

13. A table as claimed in Claim 12, **characterized in that** said actuating means comprise a control lever (M) operated manually by an operator.

## Patentansprüche

1. Schneidtisch (1) zum Bearbeiten von Glasscheiben (2), wobei der Schneidtisch (1) aufweist: einen Stützrahmen (4, 5), der eine Stützfläche (6) zum Bearbeiten einer Scheibe (2) definiert, ein Ritzwerkzeug (16) zum Ritzen der Scheibe (2), und erste Trag- und Betätigungsmittel (7, 14, 15) zum Tragen und Betätigen des Ritzwerkzeugs (16) und die vom Stützrahmen (4) in einer der Stützfläche (6) gegenüberliegender Position gehalten sind, eine Verfolgungsstation (20), die mindestens teilweise mit der Stützfläche (6) übereinstimmt, Verfolgungsmittel (21) zum Verfolgen mindestens einer Referenzbahn (P1) an der Verfolgungsstation (20), angetriebene, zweite Trag- und Betätigungsmittel (7, 14, 24; 24, 30, 31), die vom Stützrahmen (4, 5) zum Bewegen des Verfolgungsmittels (21) an mindestens der Verfolgungsstation (20) gehalten sind, und eine direkt an das Verfolgungsmittel (21) gekoppelte Steuereinheit (18), die Speichermittel (26) zum Speichern mindestens der mittels dem Verfolgungsmittel (21) gelieferten Referenzbahn (P1) und Steuermittel (26a) zum Bewegen mindestens des Ritzwerkzeugs (16) über die Stützfläche (6) als eine Funktion der gespeicherten Referenzbahn (P1) aufweist,
**dadurch gekennzeichnet, dass**
die Verfolgungsmittel (21) getrennt von dem Schneidwerkzeug (16) sind und zum Verfolgen der Referenzbahn (P1) eine Lichtleiter-Verfolgungsvorrichtung (21) aufweisen, unabhängig von den Mitteln, die zum Definieren oder Tragen der Referenzbahn (P1) verwendet sind.

2. Tisch gemäß Anspruch 1,
**dadurch gekennzeichnet, dass**
die Steuereinheit (18) auch Steuermittel (28) zum Ändern der verfolgten Referenzbahnen (P1) zum Erlangen einer modifizieren Referenzbahn und zum Abspeichern der modifizieren Referenzbahn in den Speichermitteln (26), wobei die Steuereinheit (18) mindestens das Ritzwerkzeug (16) basierend auf der modifizierten Referenzbahn steuert.

3. Tisch gemäß Anspruch 2,
**dadurch gekennzeichnet, dass**
die Steuereinheit (18) Anzeigemittel (27) zum Anzeigen mindestens einer der Referenzbahnen, die in den Speichermitteln (26) gespeichert sind, aufweist.

4. Tisch gemäß Anspruch 2 oder 3,
**dadurch gekennzeichnet, dass**
er zum Auswählen mindestens einer, der in den Speichermitteln (26) gespeicherten Referenzbahnen Auswahlmittel (28) aufweist.

5. Tisch gemäß einem der vorhergehenden Ansprüche,
**dadurch gekennzeichnet, dass**
die zweiten Trag- und Betätigungsmittel (7, 14, 24; 24, 30, 31) Betätigungsmittel (24) zum Bewegen der Verfolgungsmittel (21) von und zur Stützfläche (6) aufweisen.

6. Tisch gemäß einem der vorhergehenden Ansprüche,
**dadurch gekennzeichnet, dass**
die ersten Trag- und Betätigungsmittel (7, 14, 15) ein angetriebenes Fahrgestell (14) zum Tragen des Ritzwerkzeugs (16) aufweisen, und dass die Verfolgungsmittel (21) von dem Fahrgestell (14) getragen sind.

7. Tisch gemäß einem der Ansprüche 1 bis 5,
**dadurch gekennzeichnet, dass**
die ersten (7, 14, 15) und die zweiten (24, 30, 31) Tragund Betätigungsmittel jeweils voneinander getrennte Traganordnungen (7, 14), (30, 31) aufweisen und beide von dem Stützrahmen (4, 5) getragen sind, die sich voneinander unabhängig über die Stützfläche (6) bewegen.

8. Tisch gemäß einem der vorhergehenden Ansprüche,
**dadurch gekennzeichnet, dass**
er auch einen angetriebenen Arbeitskopf (32) und zum Tragen und Betätigen des Arbeitskopfs (32) dritte Tragund Betätigungsmittel (30, 31) aufweist, die vom Stützrahmen (4, 5) getragen sind, wobei der Arbeitskopf (32) zum Ausführen einer Materialentfernungs-Betätigung an der Glasscheibe (2) mindestens eine um eine jeweilige Achse rotierende Werkzeugspindel (33; 34) und ein von der Spindel (33; 34) getragenes Schnittwerkzeug (35) aufweist.

9. Tisch gemäß Anspruch 8,
**dadurch gekennzeichnet, dass**
die Achse mit der Stützfläche einen Winkel ungleich Null bildet.

10. Tisch gemäß Anspruch 8,
**dadurch gekennzeichnet, dass**
die Achse im Wesentlichen parallel zu der Stützfläche (6) ist.

11. Tisch gemäß einem der Ansprüche 8 bis 10,
**dadurch gekennzeichnet, dass**
der Arbeitskopf (32) eine Anzahl wahlweise aktivierbarer Spindeln (33, 34) aufweist.

12. Tisch gemäß einem der vorhergehenden Ansprüche,
**dadurch gekennzeichnet, dass**
die Verfolgungsstation (20) eine Anzahl der Referenzbahnen (P1) unterbringt, **und dass** die Steuereinheit (18) ein Betätigungsmittel (M) aufweist zum Bewegen der Verfolgungsmittel (21) zu vorgegebenen Stellen der Verfolgungsstation (20), jede korrespondierend zu einer Referenzstelle der zugehörigen Referenzbahn (P1).

13. Tisch gemäß Anspruch 12,
**dadurch gekennzeichnet, dass**
das Betätigungsmittel einen Steuerhebel (M) aufweist, der manuell von einem Bediener betätigbar ist.

## Revendications

1. Table de coupe (1) pour le traitement de feuilles (2) de verre, cette table (1) comprenant un bâti support (4, 5) formant une surface support (6) pour une feuille (2) pour son traitement, un outil à entailler (16) destiné à entailler la feuille (2), et des premiers moyens de support et d'actionnement (7, 14, 15) destinés à supporter et actionner l'outil à entailler (16) et supportés par le bâti support (4, 5) dans une position faisant face à la surface support (6), un poste de traçage (20) qui coïncide au moins partiellement avec la surface support (6), des moyens de traçage (21) destinés à tracer au moins un chemin de référence (P1) sur le poste de traçage (20), des deuxièmes moyens de support et d'actionnement motorisés (7, 14, 24 ; 24, 30, 31) supportés par le bâti support (4, 5) et destinés à déplacer les moyens de traçage (21) au moins sur le poste de traçage (20), et un dispositif de commande (18) relié directement aux moyens de traçage (21) et comprenant une mémoire (26) destinée à mémoriser au moins le chemin de référence (P1) fourni par les moyens de traçage (21) et un moyen de commande (26a) destiné à commander le déplacement au moins de l'outil à entailler (16) sur la surface support (6) en fonction du chemin de référence (P1) mémorisé, **caractérisée par le fait que** les moyen de traçage (21) sont distincts de l'outil à entailler (16) et comprennent un dispositif de traçage à fibre optique (21) destiné à tracer le chemin de référence (P1) indépendamment du moyen utilisé pour définir ou supporter ce chemin (P1).

2. Table selon la revendication 1, **caractérisée par le fait que** le dispositif de commande (18) comprend aussi un moyen de commande (28) servant à modifier le chemin de référence (P1) tracé pour créer un chemin de référence modifié, et à mémoriser le chemin de référence modifié dans la mémoire (26), le dispositif de commande (18) commandant au moins l'outil à entailler (16) sur la base du chemin de référence modifié.

3. Table selon la revendication 2, **caractérisée par le fait que** le dispositif de commande (18) comprend un moyen de visualisation (27) destiné à visualiser au moins un des chemins de référence mémorisés dans la mémoire (26).

4. Table selon l'une des revendications 2 et 3, **caractérisée par le fait qu'**elle comprend un moyen de sélection (28) servant à sélectionner au moins un des chemins de référence mémorisés dans la mémoire (26).

5. Table selon l'une des revendications précédentes, **caractérisée par le fait que** les deuxièmes moyens de support et d'actionnement (7, 14, 24 ; 24, 30, 31) comprennent un moyen d'actionnement (24) destiné à amener le moyen de traçage (21) à la surface support (6) et à l'en écarter.

6. Table selon l'une des revendications précédentes, **caractérisée par le fait que** les premiers moyens de support et d'actionnement (7, 14, 15) comprennent un chariot motorisé (14) destiné à supporter l'outil à entailler (16), et que les moyens de traçage (21) sont supportés par ce chariot (14).

7. Table selon l'une des revendications 1 à 5, **caractérisée par le fait que** les premiers moyens de support et d'actionnement (7, 14, 15) et les deuxièmes moyens de support et d'actionnement (24, 30, 31) comprennent des structures supports respectives (7, 14 et 30, 31) séparées l'une de l'autre et supportées toutes les deux par le bâti support (4, 5) pour se déplacer sur la surface support (6) indépendamment l'une de l'autre.

8. Table selon l'une des revendications précédentes, **caractérisée par le fait qu'**elle comprend aussi une tête de travail motorisée (32) et des troisièmes moyens de support et d'actionnement (30, 31) destinés à supporter et actionner cette tête de travail (32) et supportés par le bâti support (4, 5), la tête de travail (32) comprenant au moins une broche porte-outil (33 ; 34) tournant autour d'un axe propre et un outil de coupe (35) porté par cette broche (33 ; 34) et destiné à exécuter une opération d'enlèvement de matière sur la feuille (2) de verre.

9. Table selon la revendication 8, **caractérisée par le fait que** ledit axe fait un angle non nul avec la surface support.

10. Table selon la revendication 8, **caractérisée par le fait que** ledit axe est sensiblement parallèle à la surface support (6).

11. Table selon l'une des revendications 8 à 10, **caractérisée par le fait que** la tête de travail (32) comprend un certain nombre de broches (33, 34) actionnées sélectivement.

12. Table selon l'une des revendications précédentes, **caractérisée par le fait que** le poste de traçage (20) contient un certain nombre de chemins de référence (P1) et que le dispositif de commande (18) comprend des moyens d'actionnement (M) destinés à amener les moyens de traçage (21) à des points donnés du poste de traçage (20) qui correspondent chacun à un point de référence d'un chemin de référence (P1) respectif.

13. Table selon la revendication 12, **caractérisée par le fait que** les moyens d'actionnement comprennent un levier de commande (M) manoeuvré manuellement par un opérateur.
